# EUROPÄISCHE PATENTANMELDUNG

(11) **EP 0 846 842 A1**
(43) Veröffentlichungstag der Anmeldung: **10.06.1998**
(21) Anmeldenummer: 97120716.2
(22) Anmeldetag: 26.11.1997
(51) Int. Cl.: E21D 9/06, C09K 17/32, C09K 7/08, C08L 1/28

(54) **Hydrokolloide und Hydrokolloidabmischungen als Hilfsmittel für den Tiefbau, insbesondere den Tunnelbau**

(30) Priorität: 09.12.1996 DE 19651042
(71) Anmelder: WOLFF WALSRODE AG, 29655 Walsrode (DE)
(72) Erfinder: Pannek, Jörn-Bernd, Dr., 29683 Fallingbostel (DE); Kiesewetter, Rene, Dr., 29683 Fallingbostel (DE); Voigt, Thomas, Dr., 70567 Stuttgart (DE)
(74) Vertreter: Braun, Rolf, Dr.

(57) **Zusammenfassung**

Die vorliegende Anmeldung betrifft eine Hydrokolloid oder Hydrokolloidabmischung, bestehend aus mindestens einem wasserlöslichen und mindestens einem wasserunlöslichen Biopolymer als Hilfsmittel für Bohrspülanwendungen, insbesondere als schaumgenerierende oder schaumstabilisierende Komponente im Tunnelbau mit Schildvortriebstechnik, insbesondere für mit Erddruck betriebene Schildsysteme.

## Beschreibung

Die vorliegende Erfindung beansprucht den Einsatz von Hydrokolloiden bzw. Hydrokolloidabmischungen allein oder in Kombination mit oberflächenaktiven Substanzen (Tensiden) als Hilfsmittel für den Tiefbau, insbesondere den Schlitzwandbau sowie den Tunnelbau mit Schildvortriebssystemen im Vergleich zu herkömmlichen Systemen (Bentonit, Celluloseether und Tenside) zu verbesserten ökotoxikologischen Werten des zu deponierenden Bodenaushubes.

Mit der Verbesserung der innerstädtischen Infrastruktur (U-Bahn-Tunnel, Wasser- und Gasrohrleitungen, Kabel für Telekommunikations-Nachrichtensystemen u. a.) wurden zu Beginn der 60er Jahre eine Reihe von Verfahren für das maschinelle Auffahren von Tunneln in Lockergestein entwickelt, sog. Vortriebsverfahren, mit deren Hilfe erbohrtes Gestein schnell, sicher und kostengünstig ausgetragen werden sollte. Die im Laufe der Jahre immer weiter gestiegenen technischen Anforderungen an derartige Schildsysteme sowie die Anpassung an die jeweils sich ändernden geologischen Bedingungen (Bodenbeschaffenheit u. a.) führten zur Entwicklung vollkommen neuer Methoden auf diesem Gebiet (T. Krause, Diplomarbeit TU Braunschweig, 1987; DE 2457187, JP HEI 1-239293, HEI 5-59886, HEI 1-121396). Von den verschiedenen Schildsystemen, die sich z. Z. weltweit im Einsatz befinden, setzen sich immer mehr solche Systeme durch, die mit flüssigkeitsgestützter Ortsbrust (sog. Suspensionsschilde) oder mit erdgestützter Ortsbrust (sog. Erddruckschilde) arbeiten.

Bei Hydroschilden wird der erforderliche Stützdruck zur Stabilisierung der Ortsbrust durch eine Suspension aufgebracht, die an der Abbaufläche einen Filterkuchen ausbildet, über den der Stützdruck aufgebracht werden kann. Hier sind insbesondere Bentonit- und Polymersuspensionen im Einsatz. Da das Stützmedium gleichzeitig das Fördermedium für eine hydraulische Abförderung darstellt, ist der gesamte Abraum intensiv mit dem Medium vermischt und muß in einer Separieranlage hiervon wieder getrennt werden. Der verbleibende Abraum, der Restmengen des Stütz- und Fördermediums enthält, kann in der Regel nicht mehr einer Wiederverwendung zugeführt werden. Da der zu deponierende Boden auch nach der Separierung i. d. R. nur über eine geringe mechanische Festigkeit verfügt, sind aufwendige Nachbehandlungen (Trocknung) erforderlich, um den Zuordnungskriterien zur Endlagerung des zu deponierenden Bodens zu genügen.

Bei Erddruckschilden wird der abgebaute Boden selber als Stützmedium verwendet. In sehr günstigen Fällen kann der Boden u. U. unbehandelt bleiben (Feinsand- bis Tonfraktionen), so daß der gesamte Abraum unverändert zu Tage gefördert und abgelagert oder wiederverwendet werden kann. Bei weniger günstigen Bodenverhältnissen (insbesondere bei Sand- bis Kiesfraktionen mit sehr geringen Feinanteilen, in Abhängigkeit der Mineralogie auch Böden der Schluff- bis Tonfraktion) müssen auch beim Erddruckschild zusätzliche Additive zur Aufbereitung des Bodens zugegeben werden.

Diese als Konditionierungsmittel bezeichneten Additive haben die Aufgabe, den gelösten Boden ausreichend fließfähig und geschmeidig zu machen, so daß er innerhalb der Abbaukammer zu den Austragöffnungen und anschließend durch die Förderschnecke transportiert werden kann. Gleichzeitig muß der Boden ausreichend wasserundurchlässig sein, damit das ggf. anstehende Grundwasser nicht durch die Förderschnecke durchschlägt und somit unkontrolliert Grundwasser und Bodenmaterial aus der Abbaukammer entweicht, was zu einem Kollaps und ggf. zu Tagbrüchen führen würde. In Abhängigkeit der Bodenzusammensetzung wird der abgebaute Boden bei Erddruckschilden mit herkömmlichen Verfahren, wie z. B. Loren, Förderbändern oder hydraulisch an die Geländeoberfläche transportiert. Je nach eingesetztem Additiv sind auch hier Separier- und Aufbereitungsverfahren erforderlich. Die gebräuchlichen Erddruckschilde und den Stand der Technik charakterisierenden Additive, wie z. B. Bentonitsuspensionen, Celluloseether (z.B. Carboxymethylcelluloseether) sowie weitere Zugabestoffe, wie Sand, Glimmer und Zement, sind in der Literatur beschrieben (siehe z. B. T. Krause, Diplomarbeit TU Braunschweig, 1987). In Japan hat sich der Einsatz von Polymerschäumen als technisch vorteilhafte und kostengünstige Methode erwiesen. Das Prinzip und die Vorteile eines solchen Verfahrens gegenüber herkömmlichen Schildsystemen werden z. B. in JP 900018886 und JP 880061354 erwähnt (siehe auch: Firmenbroschüre der Fa. Komatsu Ltd., 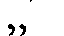 The Development of Chemical Plug Schiled Tunnelling", Japan 1990; Firmenbroschüre der Fa. Obayashi Corp. 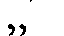 Development of Chemical Foam Injection Shield Tunnelling Method", Japan 1992, Y. Hanyuda, T. Fujiware, Research Inst. Obayashi, S. 21 (1988)). Da das Verfahren selbst nicht Gegenstand der vorliegenden Erfindung ist, sollen an dieser Stelle die verfahrenstechnischen Besonderheiten dieses Schildsystems nicht näher erläutert werden.

Die Zusammensetzung schaumgenerierender Systeme wird z. B. in DE 42006831 A1 spezifiziert. Danach bestehen diese Systeme aus oberflächenaktiven Substanzen, wie z. B. bestimmten natürlichen Proteinen, Alkylethersulfaten, wie z.B. Natrium-Laurylethersulfat, wasserlöslichen Celluloseethern, wie z. B. Methyl-, Carboxymethyl- oder Ethylcelluloseethern, und wasserabsorbierenden Harzen und Phasentransfer-Katalysatoren, wie Dodecyltrimethylammoniumchlorid, Alkyl-Benzyl-Dimethylaminoniumchloriden und Benzalconiumchlorid.

Mit Hilfe spezieller Schaumgeneratoren werden Schäume mit hohem Tragevermögen für das erbohrte Gestein in der Abbaukammer erzeugt. Das Gemisch aus Boden und Schaum wird mit herkömmlichen Methoden an die Geländeoberfläche transportiert und mit komplexbildenden Salzen bzw. speziellen Enzymen (z.B. Proteasen, Lipasen (siehe JP 90 001 8886)) behandelt. Dadurch soll insbesondere der Abbau der eingesetzten schaumerzeugenden Komponenten beschleunigt und eine umweltverträgliche Endlagerung des Boden-Schaumgemisches sichergestellt werden.

Unabhängig von der Art der Nachbehandlung des Boden-Schaum-Gemisches werden generell mindestens zwei Komponenten, ein Schaumbildner (Tensid) und ein Verdickungsmittel bzw. ein Schaumstabilisator (Celluloseether) verwendet. In vielen Fällen (s. o.) wird jedoch der Einsatz von mehr als zwei Mitteln für erforderlich gehalten, um allen technischen Anforderungen gerecht zu werden.

Der Einsatz derartiger Komponenten führt insbesondere bei der Deponierung des erbohrten Erdmaterials zu Problemen. Insbesondere dann, wenn technische Notwendigkeiten den Einsatz hoher Schaumvolumina erforderlich machen, kommt es zu einer erhöhten Belastung des Bodens. Dabei wird das im Erdaushub befindliche organische Material durch Auswaschprozesse ausgespült und gelangt dabei in das Grundwasser. Eine unbedenkliche und kostengünstige Deponierung des ausgehobenen Bodens ist somit nicht gewährleistet, so daß aufwendige Nachbehandlungen (z.B. Ausspülen des Bodens auf den zulässigen Grenzwert) oder kostenintensive Zwischen-(sog. temporäre Lagerung) oder Endlagerungen in speziell hierfür vorgesehenen Deponien (sog. Sondermülldeponien) erforderlich sind.

Ziel der Entwicklung muß es daher sein, Schaumsysteme bereitzustellen, die die positiven Eigenschaften der herkömmlichen Systeme besitzen, jedoch kostengünstig herstellbar und einsetzbar sind und in der Anwendung keinen hohen technischen Aufwand erforderlich machen. Ferner muß das Boden-Schaum-Gemisch im Vergleich zu Bentonitsuspensionen über eine ausreichende mechanische Festigkeit verfügen, um so den Zuordnungskriterien zur Endlagerung in einer Deponie zu entsprechen. Die zukünftig immer knapper werdenden Deponieflächen für Sondermüll machen es darüber hinaus erforderlich, daß das erbohrte Boden-Schaum-Gemisch ökotoxikologisch unbedenklich ist, damit das Gemisch problemlos - wie z.B. Hausmüll - deponiert werden kann.

Überraschenderweise wurde gefunden, daß durch den Einsatz von Hydrokolloiden bzw. Hydrokolloidabmischungen, wie sie in EP 0686666 A1 und EP 0416405 A1 beschrieben werden, eine Verbesserung des Standes der Technik eingestellt werden kann. Beim Einsatz dieser Komponenten in Verbindung mit oberflächenaktiven Substanzen, Tensiden, als Hilfsmittel für den Tunnelbau, insbesondere bei der Schildvortriebstechnik für mit Erddruck betriebene Schilde, werden gegenüber dem Stand der Technik insbesondere verbesserte ökotoxikologische Werte für den zu deponierenden Boden aufgenommen

Die erfindungsgemäß beanspruchten Hydrokolloide oder Hydrokolloidabmischungen bestehen aus mindestens einem wasserlöslichen Biopolymer, mindestens einem wasserunlöslichen Biopolymer und einer oberflächenaktiven Verbindung.

Unter wasserlöslichem Biopolymer werden veredelte Naturstoffe, insbesondere Polysaccharidether, vorzugsweise Carboxymethylcelluloseether, Sulfoethylcelluloseether, Ethylcelluloseether, Hydroxyethylcelluloseether, Hydroxypropylcelluloseether, Methylhydroxyethylcelluloseether oder Methylhydroxypropylcelluloseether oder Abmischungen hieraus bezeichnet.

Der Begriff wasserunlösliche Biopolymere bezeichnet unveredelte Naturstoffe wie natürliche Holzfaserstoffe (z.B. technische Cellulose, technische Rohcellulose, Weichholzcellulose, Pulvercellulose, mikrokristalline Cellulose, Lignin und Hemicellulose), insbesondere Polysaccharide, vorzugsweise Holzzellstoffe, Linters, Roh-Linters, Baumwoll-Linters, Cellulosechemiezellstoffe oder Gemische hieraus.

Unter oberflächenaktiven Komponenten werden Aniontenside, Kationtenside, nicht-ionische Tenside oder Amphotenside verstanden. Insbesondere werden solche oberflächenaktiven Komponenten beansprucht, die aus nachwachsenden Rohstoffen, wie z. B Mais, Kokos- oder Palmkernöl u. a. gewonnen werden. Erfindungsgemäß werden vorzugsweise nicht-ionische Tenside vom Typ der Alkylpolyglycoside mit Alkylkettenlängen von C₄ - C₃₀ allein oder in Kombination mit herkömmlichen waschaktiven Komponenten, wie z. B. Laurylethersulfat, Fettalkoholsulfaten u. a. beansprucht.

Die erfindungsgemäß beanspruchten Zubereitungen können zusätzlich nach dem Stand der Technik übliche Hilfsstoffe, insbesondere Füllstoffe, Konservierungsmittel, Luftporenbildner, Phasentransferkatalysatoren, Emulgatoren, dispergierende oder absorbierende Polymere (z. B. Harze) u. ä. oder Gemische hieraus enthalten. Derartige Hilfsstoffe werden vorzugsweise in Mengen von maximal 35 %, insbesondere bis zu 25 % eingesetzt, ohne dabei das Wesen der vorgenannten erfindungsgemäß beanspruchten Zubereitung zu verändern.

Die Erfindung wird im folgenden anhand von bevorzugten Ausführungsbeispielen im Vergleich zum Stand der Technik näher erläutert.

Die zum Einsatz gelangten Celluloseether bzw. physikalischen Mischungen von Celluloseethern werden durch die in Tabelle 1 bezeichneten Kenndaten charakterisiert.

**Tabelle 1**

| Charakteristische Kenndaten von im Rahmen der Erfindung ausgetesteten Zubereitungen | | | | | | |
|---|---|---|---|---|---|---|
| Prod.-Nr. | Celluloseether | Substitutionsgrad DS-CM¹⁾ | Salzgehalt [%]⁴⁾ | Trockengehalt [%] | Viskosität [mPas]⁵⁾ | Bemerkung |
| 1 | Produkt 1 ²⁾ | 0,81 | 15,2 | 5 | 2.470 | Stand der Technik |
| 2 | Produkt 2 ³⁾ | 0,58 | < 1 | 6,2 | 7.680 | Erfindung |

| | | | | | | |
|---|---|---|---|---|---|---|
| 1) Durchschnittlicher Substitutionsgrad durch Carboxymethyl(CM)-Gruppen | | | | | | |
| 2) Carboxymethylcellulose 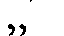 OK 2", Fa. Daiichi Kasei Sangyo Kabushiki Kaisha, Japan | | | | | | |
| 3) Walocel VP-C-2427, Wolff Walsrode AG, Deutschland | | | | | | |
| 4) Natriumchlorid | | | | | | |
| 5) Brookfield RVT, c = 2 %, T = 25°C, 100 UpM | | | | | | |

Der Vorteil des Einsatzes der erfindungsgemäß beanspruchten Zubereitungen wird anhand der weiter unten beschriebenen Meßmethoden exemplarisch beschrieben. Für die Herstellung der Schäume wird ein Schaumgenerator verwendet, wie er in der Literatur beschrieben wird (siehe U. Maidl, Dissertation 1995, Ruhr-Universität Bochum, Deutschland). Die flüssige Schaumlösung, bestehend aus Wasser, Carboxymethylcellulose bzw. Hydrokolloid und einem Tensid, wird zusammen mit dem Schaumgenerator dosiert zugeführt und gemeinsam mit Druckluft in einen feinporigen Schaum überführt. Unterschiedliche Mengen an Schaum (in Tabelle 2 dargestellt als Vol.-% Schaum) werden einem Boden definierter Zusammensetzung und Korngrößenverteilung zugeführt. Die Körnungslinie des Musterbodens (Z1) gibt Abbildung 1 wieder. Die Böden wurden innerhalb von 48 h hinsichtlich der in Tabelle 3 bezeichneten ökotoxikologischen Parameter untersucht.

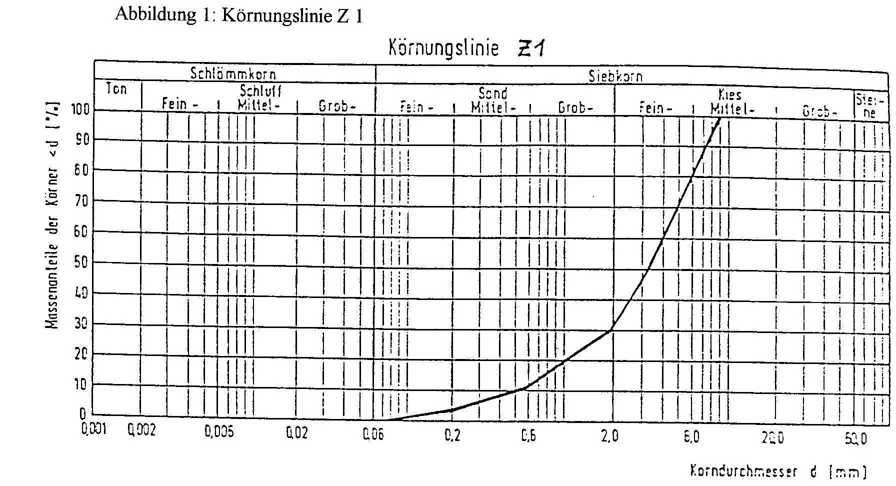

**Tabelle 2**

| Feldversuche zur Herstellung von Polymerschäumen mit einem Schaumgenerator | | | | | | |
|---|---|---|---|---|---|---|
| Lfd Nr. | Polymer¹⁾ | Polymerkonzentration [%] | Tensid²⁾ | Tensidkonzentration [%] | Zugabe Schaum [Vol.-%] | Bemerkung |
| 1 | CMC | 0,9 | OK 1 | 3 | 10 | Stand der Technik |
| 2 | CMC | 0,9 | OK 1 | 3 | 40 | Stand der Technik |
| 3 | CMC | 0,9 | OK 1 | 3 | 60 | Stand der Technik |
| 4 | VPC-2427 | 0,5 | OMC 181 | 3 | 10 | Erfindung |
| 5 | VP-C-2427 | 0,5 | OMC 181 | 3 | 40 | Erfindung |
| 6 | VP-C-2427 | 0,5 | OMC 181 | 3 | 60 | Erfindung |
| 7 | VP-C-2427 | 0,7 | OMC 853 b | 3 | 10 | Erfindung |
| 8 | VP-C-2427 | 0,7 | OMC 853 b | 3 | 40 | Erfindung |
| 9 | VP-C-2427 | 0,7 | OMC 853 b | 3 | 60 | Erfindung |

| | | | | | | |
|---|---|---|---|---|---|---|
| 1) CMC ≡ OK 2, Carboxymethylcellulose, Fa. Daiichi Kasei Sangyo Kabushiki Kaisha, Japan, VP-C-2427® ≡ Walocel VP-C-2427, Wolff Walsrode AG | | | | | | |
| 2) OK I® ≡ Tensid, Fa. Daiichi Kasei Sangyo Kabushiki Kaisha, Japan, Feststoffgehalt: 19,8 % OMC 181® ≡ Tensid, Fa. Henkel KGaA, Düsseldorf Feststoffgehalt: 30 % OMC 853 b ≡ Tensid, Fa. Henkel KGaA, Düsseldorf, Feststoffgehalt: 63 % | | | | | | |

Die anwendungstechnischen Versuche zeigen, daß mit den in Tabelle 2 unter lfd. Nr. 4 - 9 bezeichneten Produkten der Stand der Technik eingestellt werden kann. In der ökologischen Bewertung zeigen die Produkte jedoch eine deutliche Verbesserung gegenüber dem Stand der Technik, so daß auch bei extrem hohen Zugabemengen an Schaum eine kostengünstige und einfache Deponierung des ausgehobenen Erdmaterials gewährleistet wird (siehe Tabelle 3).

**Tabelle 3**

| Analytik des mit Polymerschäumen behandelten Bodens | | | | | | | |
|---|---|---|---|---|---|---|---|
| Lfd. Nr. | Produkt ¹⁾ | Trockengehalt Boden [%] | Analytik des Bodengehaltes | | | | Bemerkung |
| | | | NH₄-N [mg/l]²⁾ | DOC³⁾ [mg(c)/l] | CSB⁴⁾ [mg(o)/l] | pH-Wert⁵⁾ | |
| 0 | Bodennullprobe | 96,5 | 0,02 | 1,7 | < 2 | 9,6 | Nullprobe |
| 1 | CMC | 96,1 | 0,09 | 1,1 | 2,1 | 9,35 | Stand der Technik |
| 2 | CMC | 93,8 | 0,08 | 13,4 | 47,3 | 9,3 | Stand der Technik |
| 3 | CMC | 92,4 | 0,09 | 24,1 | 72,0 | 9,4 | Stand der Technik |
| 4 | VP-C-2427 | 96,1 | 0,08 | 4,7 | 9,7 | 8,6 | Erfindung |
| 5 | VP-C-2427 | 95,2 | 0,37 | 4,7 | 9,4 | 8,9 | Erfindung |
| 6 | VP-C-2427 | 94,9 | 0,42 | 3,9 | 12,5 | 8,9 | Erfindung |
| 7 | VP-C-2427 | 96,8 | 0,08 | 8.5 | 15.1 | 9,1 | Erfindung |
| 8 | VP-C-2427 | 96,1 | 0,07 | 2,2 | 17,0 | 8,9 | Erfindung |
| 9 | VP-C-2427 | 95,7 | 0,13 | 10,5 | 12,6 | 9,2 | Erfindung |

| | | | | | | | |
|---|---|---|---|---|---|---|---|
| 1) CMC und VP-C-2427 s. Tabelle 1; lfd. Nr. 1 - 9 in Tabelle 1 bzw. 2 bezeichnen identische Polymere (CMC's) | | | | | | | |
| 2) Ammonium-Bestimmung photometrisch nach Dr. Lange's Küvettentest. Die Proben wurden vorher durch einen Membranfilter filtriert, um störende organische Substanzen zu entfernen. | | | | | | | |
| 3) Bestimmung des löslichen Gesamt-Organischen Kohlenstoffs mit dem Analysengerät Shimadzu DOC 500 | | | | | | | |
| 4) Photometrische Bestimmung des Chemischen Sauerstoffbedarfs mittels Dr. Lange's Küvettentest | | | | | | | |
| 5) pH-Wert-Bestimmung mit dem Meßgerät WTW pH-Meter pH 192 | | | | | | | |

Bei der ökologischen Analyse des Bodeneluates zeigt sich, daß für die erfindungsgemäß beanspruchten Zubereitungen aus Hydrokolloid bzw. Hydrokolloidabmischung und Tensid niedrige Werte für den im Filtrat des Bodens gelösten organisch gebundenen Kohlenstoff (in Tabelle 3 dargestellt als DOC-Wert) auch dann erhalten werden, wenn anwendungstechnische oder geophysikalische Notwendigkeiten (z.B. bei der Einstellung ausreichender abdichtender und schmierender Funktionen am Schneidrad) es erforderlich machen, dem Boden größere Mengen an Schaum (in Tabelle 2 dargestellt als Zugabe Schaum in Vol.-%) hinzuzusetzen (s. auch CSB-Werte in Tabelle 3).

## Patentansprüche

1. Hydrokolloid oder Hydrokolloidabmischung, bestehend aus mindestens einem wasserlöslichen und mindestens einem wasserunlöslichen Biopolymer als Hilfsmittel für Bohrspülanwendungen, insbesondere als schaumgenerierende oder schaumstabilisierende Komponente im Tunnelbau mit Schildvortriebstechnik, insbesondere für mit Erddruck betriebene Schildsysteme.

2. Hydrokolloid oder Hydrokolloidabmischung nach Anspruch 1, bestehend aus mindestens einem wasserlöslichen und einem wasserunlöslichen Biopolymer und einer oberflächenaktiven Verbindung als Hilfsmittel für Bohrspülanwendungen, insbesondere als schaumgenerierende oder schaumstabilisierende Komponente im Tunnelbau mit Schildvortriebstechnik, insbesondere für mit Erddruck betriebene Schildsysteme.

3. Hydrokolloid oder Hydrokolloidabmischung nach mindestens einem der o. g. Ansprüche, dadurch gekennzeichnet, daß unter wasserlöslichem Biopolymer veredelte wasserlösliche Naturstoffe, insbesondere wasserlösliche Polysaccharidether verstanden werden.

4. Hydrokolloid oder Hydrokolloidabmischung nach mindestens einem der o. g. Ansprüche, dadurch gekennzeichnet, daß unter wasserunlöslichem Biopolymer wasserunlösliche, unveredelte Naturstoffe, insbesondere wasserunlösliche Polysaccharide verstanden werden.

5. Hydrokolloid oder Hydrokolloidabmischung nach mindestens einem der o. g. Ansprüche, dadurch gekennzeichnet, daß es sich bei der oberflächenaktiven Komponente um Tenside, insbesondere um nicht-ionische, anionische, kationische oder amphotere Tenside sowie Abmischungen derselben handelt.

6. Hydrokolloid oder Hydrokolloidabmischung nach mindestens einem der o. g. Ansprüche, dadurch gekennzeichnet, daß es sich bei der oberflächenaktiven Komponente um nicht-ionische Tenside sowie Abmischungen derselben mit anionischen, kationischen oder amphoteren Tensiden handelt.

7. Hydrokolloid oder Hydrokolloidabmischung nach mindestens einem der o. g. Ansprüche, dadurch gekennzeichnet, daß es sich bei der oberflächenaktiven Komponente um Tenside aus nachwachsenden Rohstoffen, insbesondere um nicht-ionische Tenside vom Typ der Alkylpolyglycoside handelt, die allein oder in Kombination mit herkömmlichen anionischen, kationischen, nicht-ionischen oder amphoteren Tensiden eingesetzt werden.

8. Hydrokolloid oder Hydrokolloidabmischung nach mindestens einem der o. g. Ansprüche, dadurch gekennzeichnet, daß es sich bei der oberflächenaktiven Komponente um nicht-ionische Tenside vom Typ der Alkylpolyglycoside mit Alkylkettenlängen von C₄ - C₃₀ handelt.

9. Hydrokolloid oder Hydrokolloidabmischung nach mindestens einem der o. g. Ansprüche, dadurch gekennzeichnet, daß die wasserlöslichen Biopolymere Celluloseether, insbesondere Carboxymethylcelluloseether, Sulfoethylcelluloseether, Ethylcelluloseether, Hydroxyethylcelluloseether, Hydroxypropylcelluloseether, Methylhydroxyethylcelluloseether oder Methylhydroxypropylcelluloseether oder Abmischungen hieraus bezeichnen.

10. Hydrokolloid oder Hydrokolloidabmischung nach mindestens einem der o. g. Ansprüche, dadurch gekennzeichnet, daß es sich bei den wasserunlöslichen Biopolymeren um Polysaccharide, insbesondere natürliche Holzfaserstoffe, vorzugsweise um Holzzellstoffe, technische Cellulose, technische Rohcellulose, Weichholzcellulose, Pulvercellulose, mikrokristalline Cellulose, Linters, Roh-Linters, Baumwoll-Linters, Cellulosechemiezellstoffe oder Gemische hieraus handelt.
